# EUROPEAN PATENT APPLICATION

(11) **EP 0 939 001 A2**
(43) Date of publication of application: **01.09.1999**
(21) Application number: 99301473.7
(22) Date of filing: 26.02.1999
(51) Int. Cl.: B60P 1/64, B60P 1/48

(54) **Demountable frame**

(30) Priority: 27.02.1998 GB 9804290
(71) Applicant: MacKrill, David, Bury St. Edmunds, Suffolk, IP33 2BJ (GB)
(72) Inventor: MacKrill, David, Bury St. Edmunds, Suffolk, IP33 2BJ (GB)
(74) Representative: Chettle, Adrian John

(57) **Abstract**

A demountable frame (10) for a vehicle (68) fitted with hook unit equipment. The frame (10) includes skip arms (60) which are operable to hoist a skip (78) to and from the frame (10). The frame (10) further comprises a base section (12) and an upstanding section front section (24) pivotably connected thereto. Link members (56) extend between the front section (24) and the skip arms (60). In a preferred embodiment the front section (24) comprises inner and outer sections (26,28) movable relative to one another by drive means. The drive means may comprise double acting hydraulic rams or alternatively a driven threaded rod (44) and a captive nut (46).

## Description

This invention relates to a demountable frame for a vehicle, and particularly to a demountable skip unit for a truck.

It is well known to transport materials using demountable containers of trucks. Such demountable containers can be delivered empty, and collected later when full. Thus the truck does not have to wait for the container to be filled, and typically only one truck is required per 20-40 containers.

Two types of demountable container are in common use. The smaller container, termed a "skip" is usually 4-12 cubic metres in capacity, and is lifted from the rear onto a 2-axle truck by hydraulically actuated hinged arms. Skips are commonly used for e.g. refuse, scrap metal and builders' rubble. For tipping purposes the rear lower portion of the skip is restrained on the truck such that rearward movement of the arms causes lifting of the skip by the foremost end until it is partially inverted over the rear of the vehicle. The typical cost of a skip unit (the operating mechanism) is about £14,000 to which must be added the basic cost of the truck.

Whilst the majority of skips are open, many other kinds of skip, or closed container, can be lifted onto a vehicle using a skip unitr, for example closed containers for waste paper. Since operators have a large investment in skips, there is a steady trade in new trucks/skip units.

The second kind of demountable container comprises a large rectangular box typically 4.8 or 6.1 metres long and mounted on a 2, 3 or 4 axle truck. Such containers are loaded over the rear of the vehicle by a hook unit movable from the rear of the vehicle to the front on the centre line of the vehicle. Since the side arms found on the skip unit are not provided, the container can be as wide and as high as the law and practical considerations permit. Such a container is typically used for transporting compressed domestic waste from a transfer station to a landfill site. In common with a truck mounted skip unit, the hook unit is permanently attached to a truck and serves a number of containers. The hook unit can also be used to adapt a vehicle chassis to a number of demountable bodies, such as a hazardous chemicals unit or water tank of a fire service vehicle.

Typically an operator may have 5 to 10 skip unit and 5 to 10 hook unit trucks at a depot. For practical purposes it is usually necessary to have one vehicle of each type held in reserve in order to deal with breakdowns, emergencies, vehicle repairs and the like.

It has been proposed to provide a demountable skip unit for a truck fitted with hook unit equipment. However, provision of the necessary hydraulic supply to the skip unit is problematic. The attachment of hydraulic fittings can be messy and require tools, which may ot be readily available. Quick release hydraulic fittings can be used to connect the supply, but these inevitably restrict the flow of oil and cause undesirable warming. Furthermore, the hydraulic connections of such a demountable unit are vulnerable to accident damage. In addition, such a demountable unit may remain inactive for long periods, which may cause deterioration of the hydraulic rams and other components.

The aim of the present invention is to provide a demountable skip unit for a truck fitted with hook unit equipment, and which is inexpensive, simple and reliable.

According to one aspect of the invention there is provided a demountable skip unit for a vehicle fitted with hook unit equipment as defined herein, the demountable skip unit comprising an articulated frame having skip arms pivotable thereon, the skip arms being operable by the hook unit equipment to load and unload a skip from the frame.

With such an arrangement, the hook unit itself is used to articulate the frame, and thus load and unload the skip; the prior art hydraulic connections and rams are not required, and movement is by mechanical connection to the hook of the hook unit equipment.

Selectable latch means may be provided between relatively movable elements of the frame, and between the frame and the vehicle to which the demountable unit is to be attached. Engagement and disengagement of such latch means can impart a different motion to the frame. This has the advantage that fore and aft movement of the hook unit can be used to perform different operations on the frame or on a skip carried by the frame.

In a preferred embodiment the hook unit is also used to mount and demount the frame. The frame may also be adapted to partially upend a skip for emptying thereof.

The skip arms may be pivotable on the frame by auxiliary drive means. The drive means may include link means between a motor of the frame and the skip arms. In one embodiment the drive means comprise respective electric motors operable to drive the skip arms through a screw and nut arrangement. The electric motors may act as latch means by preventing relative motion between the posts connected thereto. In an alternative embodiment the drive means may comprise hydraulic rams. Preferably the hydraulic rams form part of a self contained hydraulic circuit provided on the frame. The hydraulic circuit preferably includes a pump powered by a petrol driven motor.

An electrical supply to electric motors, or to electrically actuatable latch bolts can be easily and safely arranged from the vehicle electrical system.

The link means preferably comprises respective rigid links for the skip arms. The or each link may incorporate shock absorbing means. In a preferred embodiment, each link may comprise two sections which are interconnected through a spring arrangement, the spring arrangement permitting resilient relative movement to take place between the sections so as to cushion movement of the frame elements.

The frame preferably comprises a horizontal section and an upstanding section arranged at the front end of the horizontal section. The upstanding section is pivotally mounted at its lower end relative to the horizontal section for pivoting in the fore and aft direction of the truck. In the preferred embodiment, the upstanding section comprises inner and outer sections in a sense transverse to the fore and aft direction. The inner and outer sections are preferably pivotable about the same axis.

The inner section may include a location for a hook of the hook unit.

The or each outer section is preferably connected to the link means for moving the skip arms.

In the preferred embodiment the inner and outer sections are pivotable relative to each other by the aforesaid drive means. A releasable latch may be provided to latch the inner or outer section relative to the frame, thereby to prevent relative movement. In a preferred embodiment the inner and outer sections are held perpendicular to the frame preferably by a selectable latch.

In the preferred embodiment the links extend from the top of the outer sections to the respective skip arms. The links are preferably connected to the skip arms below the suspension axis of a skip.

The frame preferably carries the usual skip tipping hook or chains engageable with projections of the skip. The projections preferably define an axis about which the skip can pivot on the frame to enable the skip to be upended.

In the preferred embodiment the inner and outer sections are pivotable downwardly by the hook unit equipment relative to the frame, rearward movement of the frame being limited by a constraint device extending between the frame and the vehicle, for example a length of chain. Such an arrangement permits loading and unloading of skips by simple mechanical connection with the hook of the hook unit equipment. In one embodiment the frame is provied with two lengths of chain which are connectable between the rear of the vehicle and the rear of the frame. In an alternative embodiment a length of chain is provided which extends between the frame and the hook unit equipment. In such an embodiment the chain preferably extends between the upstanding section and the hook unit equipment.

According to another aspect of the invention there is provided a vehicle having thereon a demountable skip unit as set out in the aforesaid first aspect of the invention or any of the consistory clauses relating thereto.

A demountable frame in accordance with the invention will now be described by way of example with reference to the accompanying drawings in which:
Figure 1 is an elevation of a demountable frame in accordance with the invention illustrating pivotal movement of various components;
Figure 2A is a front view of part of the frame looking in the direction of arrow X in figure 1; and Figure 2B is an elevation of the left-hand end of the frame shown in figure 1 (herein referred to as the front end) and looking in the direction of Arrow Y in figure 2A;
Figure 3 shows the frame arranged on the ground behind a vehicle fitted with hook unit equipment;
Figure 4 shows the frame connected to a skip and in a first stage of skip loading on to the vehicle;
Figures 5 and 6 show second and third stages of loading the skip;
Figure 7 shows the skip finally loaded onto the vehicle;
Figures 8 and 9 show first and second stages of a sequence enabling a heavily laden skip on the vehicle to be emptied;
Figures 10 and 11 show first and second stages of a sequence enabling a lightly laden skip on the vehicle to be emptied;
Figure 12 show the final stage of a skip emptying sequence; and
Figure 13 shows a diagrammatic side view of a frame, hook unit equipment and constraint device.

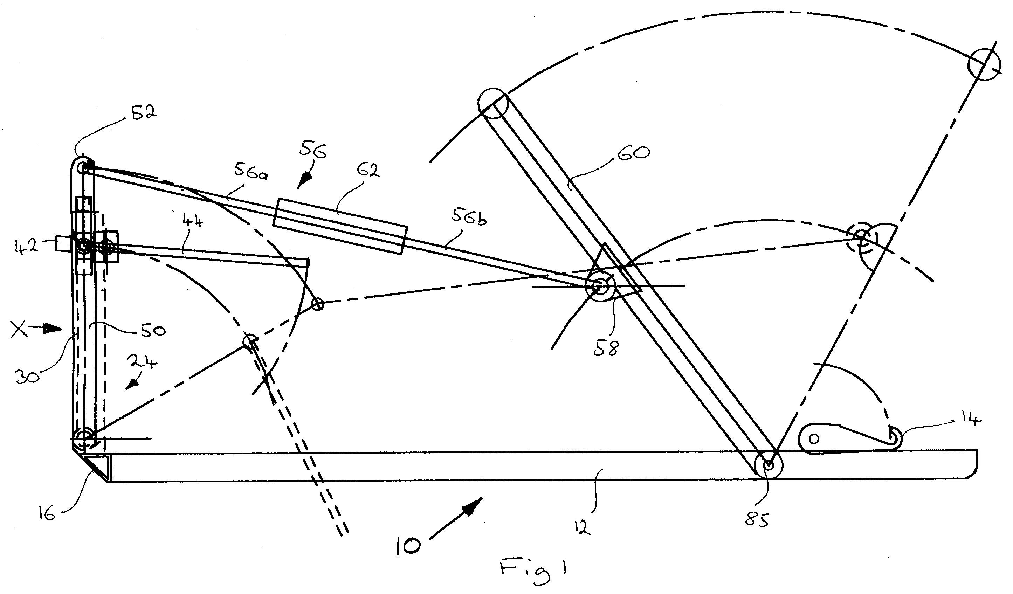

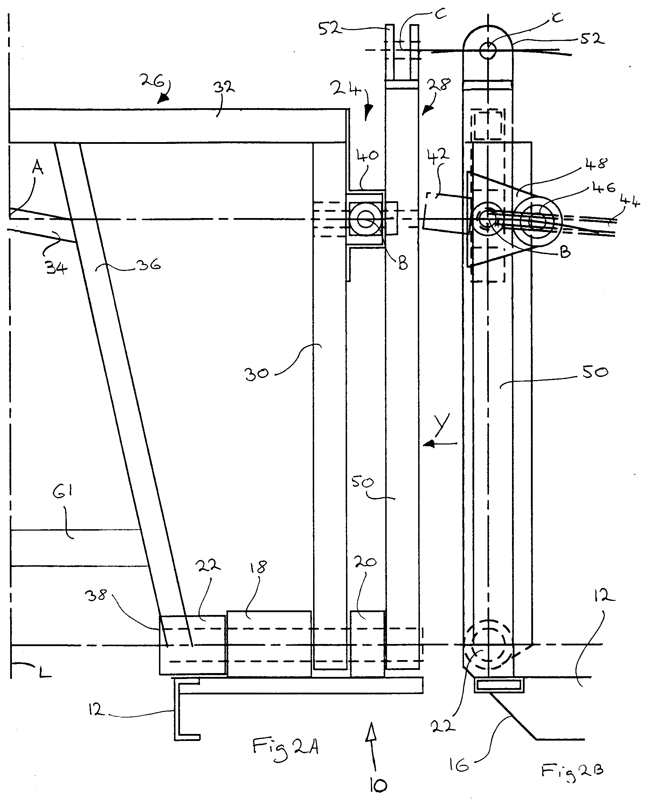

Referring to figures 1 to 2B there is shown a ladder type frame generally indicated at 10 and for mounting on a vehicle chassis comprises two parallel side members 12 interconnected by cross members (not shown). Towards its rear end (the right hand end as illustrated) each side member carries a pivotal hook 14 of known kind for location on a skip as described below. The front end of each side member 12 carries an outwardly protruding end member 16 which supports spaced-apart mounting blocks 18, 20. The mounting blocks 18, 20 rigidly support a shaft 22. Figure 2A shows half of the frame, the other half about a centre-line (L) being a mirror image of that shown in figure 2A.

An upstanding front section 24 of the frame 10 comprises inner and outer sections 26, 28. The inner section 26 comprises spaced-apart vertical members 30, mounted for pivoting at their lower ends on the respective shafts 22, and interconnected at the upper ends by a cross-bar 32. Bracing members 36 extend from the mid-region of the cross-bar 32 to respective bosses 38 which are pivotably mounted on the inner ends of shafts 22. A lift bar 34 extends between the upper ends of bracing member 36. A cross member 61 extends between the lower ends of the bracing members 36. The cross member 61 is adapted to receive a length of chain (not shown) which in use can be looped around the hook unit equipment to constrain movement of the frame 10 relative thereto.

Each outer section comprises an upwardly extending arm 50 having its lower end also pivotally mounted on a respective shaft 22.

Each of the vertical members 30 carries a trunnion mounting 40 of an electric motor 42 which drives a rod 44 screw-threaded in a respective nut 46 of an arm 50. Each nut 46 can swivel in a bracket 48 of a respective arm 50.

Operation of each electric motor 42 causes its screw 44 to pivot the associated outer section arm 50 relative to the inner section 26. Normally, the motors 42 on both sides of the inner section 26 will be operated simultaneously. However, they may be operated independently as described below in certain circumstances. In an alternative embodiment the motors 42, rods 44, nuts 46 and trunnion mountings 40 may be replaced with double acting hydraulic cylinders and a hydraulic circuit.

It will be appreciated that the inner and outer sections 26,28 can both pivot relative to the frame 10. However, stop means (not shown) is provided to limit the forward pivotal movement so that they cannot move beyond a position substantially perpendicular to the side members 12.

The inner and outer sections 24,26 can be latched for movement together, as will be explained.

As shown in figure 1, each arm 50 has a bifurcated insert 52 at the upper end. Respective links 56 are pivotally connected between respective inserts 52 and brackets 48 of skip lifting arms 60, provided one on each side of the frame 10. Although the links 56 can be a single straight elongate member, in the preferred embodiment each link comprises front and rear sections 56a and 56b which are resiliently moveable relative to one another along the axis of the link, and which have their adjacent inner ends arranged within a shock absorber unit 62. The upper end of each skip-carrying arm 60 carries the usual chains for connection to a skip.

The manner in which the frame 10 can be mounted on a vehicle and the way in which a skip can be carried by the frame will now be described with reference to the remaining accompanying drawings.

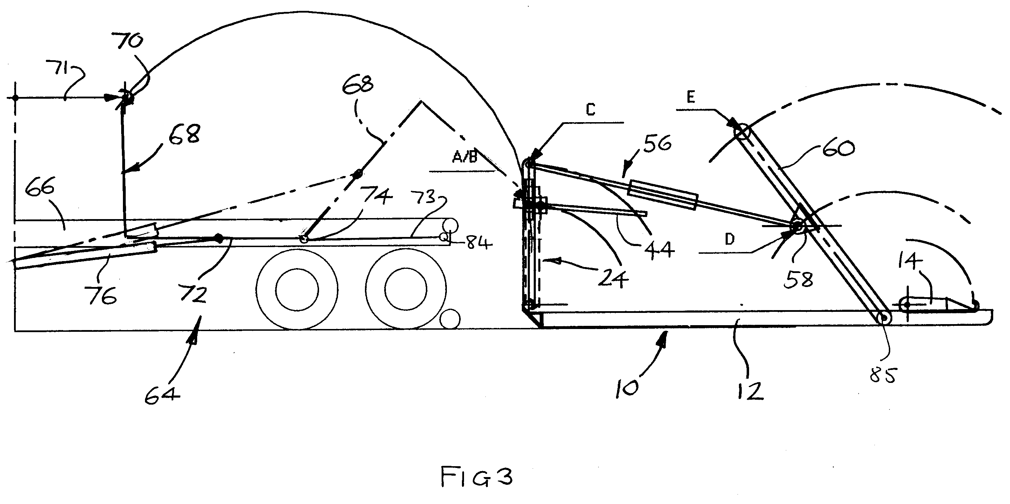

With reference to figure 3, a vehicle generally indicated at 64 has the usual type of hook unit equipment carried by its chassis 66, and illustrated diagrammatically. Thus, the hook unit equipment comprises the usual goose-neck member 68 having a hook 70 at its upper end, and a lower member 72,73 mounted on the chassis 66. The goose-neck member 68 is moveable about a forward pivot 74 or about a rear pivot 84 by one or more hydraulic rams 76 of the chassis 66 and, as is well known, the lower member 72,73 is arranged on the centre-line of the vehicle. The foremost part 72 of the lower member can be extended or contracted by an internal hydraulic ram, as will be further explained below. The rear pivot 84 is slightly above the forward pivot 74 for reasons which will become clear.

In order to lift the frame 10 on to the vehicle 64, the internal ram of lower member 72 is contracted so as to move the goose-neck member 68 back through the distance indicated by arrow 71. The lift ram(s) 76 are then extended to move the gooseneck member 68 through an arc to the position shown in broken lines. The goose-neck tends to pivot about forward pivot 74 rather than rear pivot 84 by virtue of the centre pivot being lower and thus "over centre". The position of the lift bar 34, the nut 46 and the bifurcated insert 52 are indicated at A, B and C respectively in figures 2A and 2B and the positions of those parts are also indicated by those letters in figures 3 to 11. In addition, the position of the brackets 58 is indicated at D and the upper end of the skip lifting arm 60 by letter E. Positions into which those parts move are indicated by A1, B1, etc.

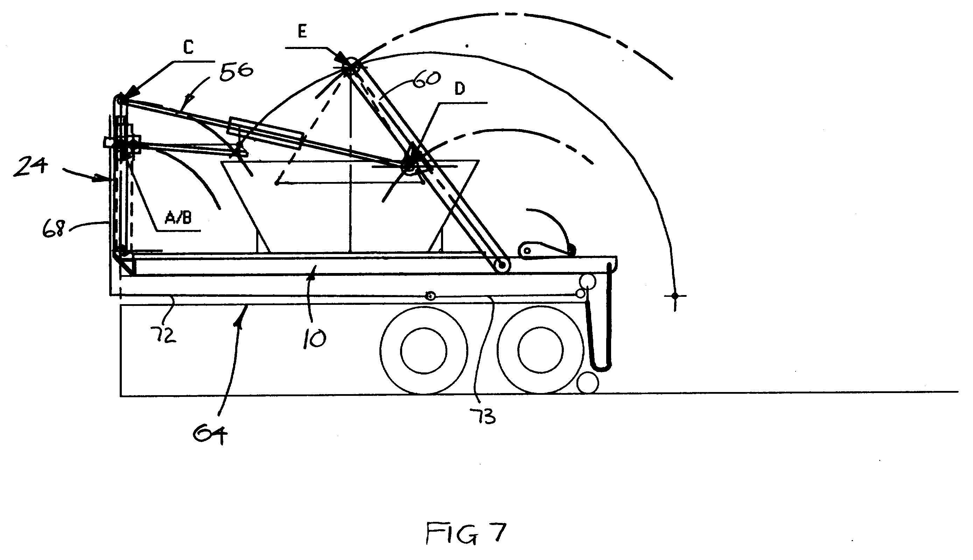

With the goose-neck member 68 moved to the broken line position in Figure 3, the hook 70 is engaged with the lift bar 34; the goose neck member 68 is then moved anti-clockwise by the ram 76 to lift the front end of the frame 10 upwards and over the rear of the vehicle, the goose-neck member 68 resting at the position shown in full lines with the frame resting on the chassis 66. The member 72 of the goose-neck 68 is then extended by the internal ram to move the frame 10 fully onto the vehicle as shown, for example, in figure 7. The demountable frame is operational to load and unload skips once electrical connections are made to the motors 42. As the member 72 extends, pockets on the underside of the frame 10 engage upstanding hooks in the non-extending part 73 of the lower member. This locks the frame 10 for transport and has another purpose as will become apparent. As described so far, the hook unit equipment including the rams, pockets and upstanding hooks is conventional.

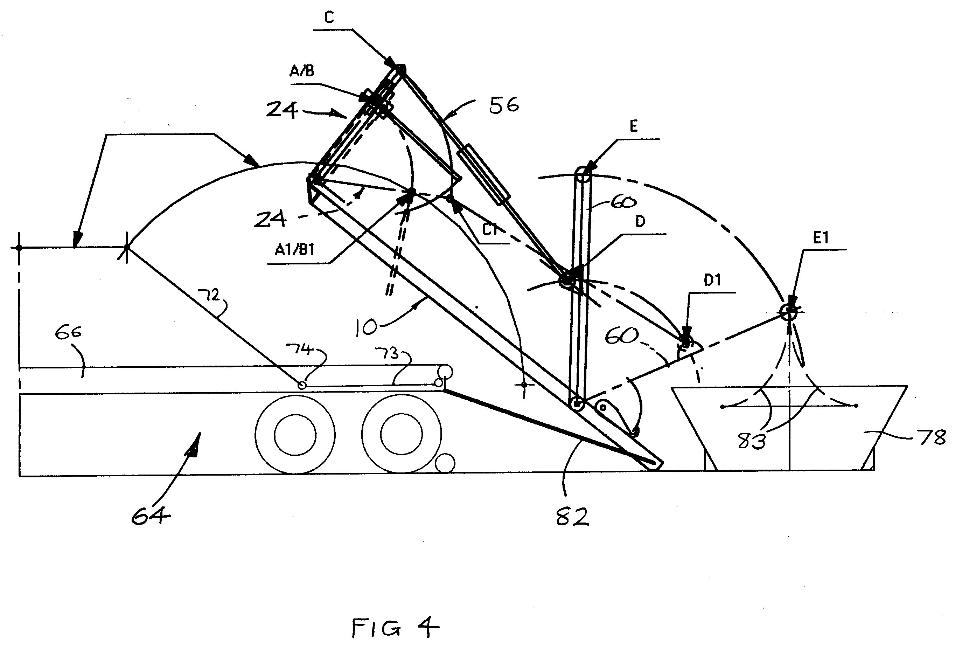

To pick up a skip 78, as shown in figures 4 to 7, a restraint device, for example a chain 82, is connected between the rear end of the frame 10 and the rear of the vehicle 64. The goose-neck member 68 is moved back by the internal ram, and then clockwise by the ram(s) 76 thus causing the frame to tip until restrained by chain 82 (Fig.4). The upstanding front sections 24,26 pivot rearwardly to the broken line position. The inner and outer sections 24,26 move together by virtue of the screw and nut connections. The skip-lifting arms 60 move from the full line position into the broken line position of figure 4. As previously explained, the inherent geomtry causes the lower member 72,73 to hinge about forward pivot 74. With the skip lifting arm 60 in the broken line position, slack chains carried by the arms 60 can be connected to the usual mounting points of a skip 78.

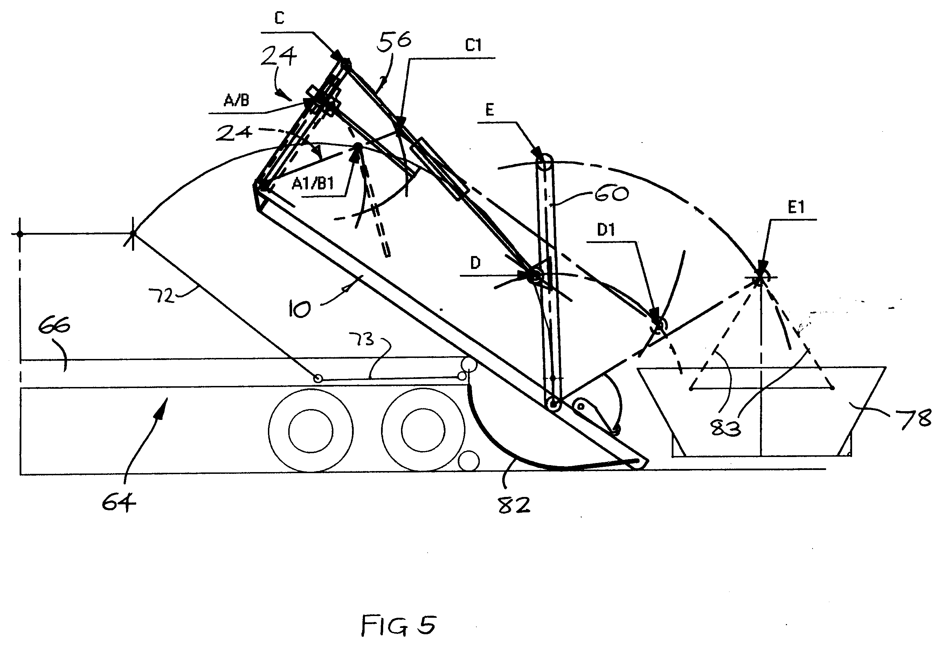

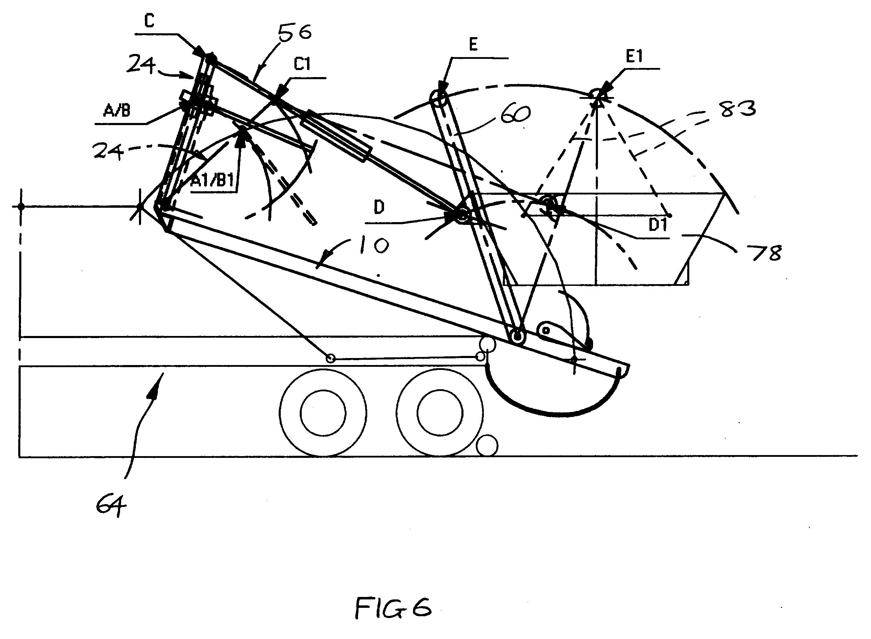

To lift the skip the goose-neck member 68 is moved anti-clockwise by ram(s) 76; this tends to draw the frame 10 into contact with the rear end of the vehicle 64 as shown in figure 5. Once the frame 10 is in contact with the vehicle, further movement of the goose-neck member 68 brings the front section 24 upright and begins to swing the arm 60 anti-clockwise to tigthen the chains 83; thus lifting the skip 78 clear of the ground. Continued anti-clockwise movement of the goose-neck member 68 lifts the frame 10 off the ground, and moves it through the figure 6 position, the frame 10 and skip 78 finally taking up the end position shown in figure 7 after being drawn forward against the vehicle cab.

To unload a skip 78 from the vehicle 64 to the ground, the sequence of figures 4 to 7 is reversed. When reaching the position in figure 5, the motors 42 can be operated independently if desired in order to position the respective arms 60 at different angles relative to the frame 10. This slewing feature may be useful when depositing the skip 78 on ground which slopes to one side relative to the ground on which a vehicle is standing.

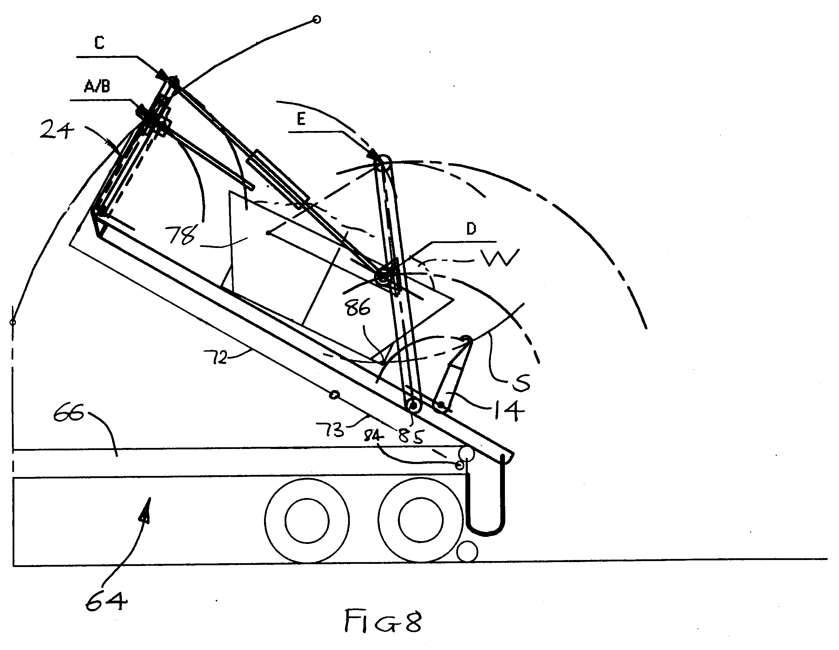

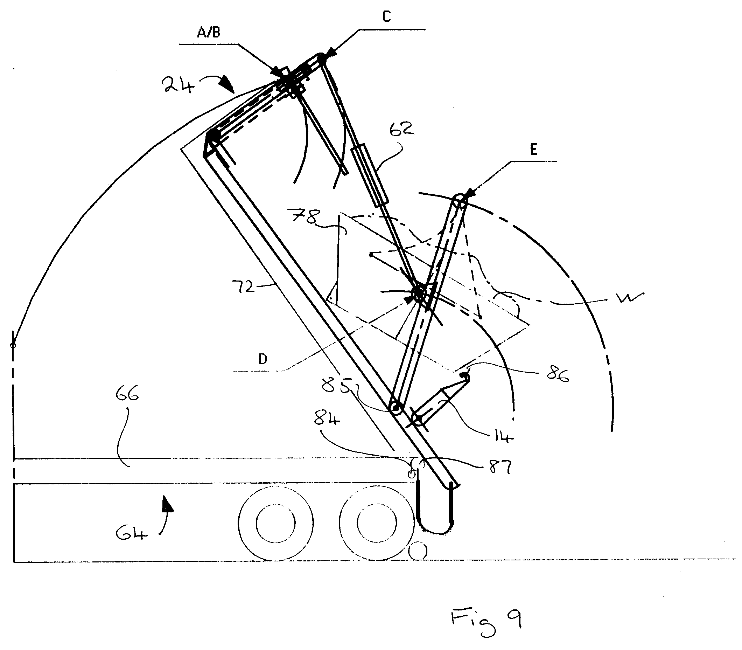

Figures 8,9 and 12 show a first way in which the skip 78, when filled with waste material W, can be tipped for emptying and is particularly suitable when the skip is heavily laden. The internal ram of lower member 72 is locked in an extended condition; thus the pockets and upstanding hooks of frame 10 and lower member 73 are engaged. Furthermore, the inner section 26 is latched in the perpendicular condition, for example by manually or electrically operable bolts. Actuation of the ram(s) 76 causes the goose-neck member 68 to be pivoted anti-clockwise to tip the frame 10 in the manner shown in figure 8. Pivoting about centre pivot 76 is prevented due to latching of the pockets and upstanding hooks. Tipping is continued until the skip 78 swings slightly about E along the curve indicated at S whereupon the hooks 14 can be pivoted anti-clockwise relative to the frame 10 so as to engage the usual projections 86 on the skip 78. This is shown in Figure 9. At this point, the centre of gravity of the skip 78 has passed clockwise over the pivot axis 65 of the skip lifting arm 60, with the result that the weight of the skip urges the arm 60 to pivot about the axis 85. This motion is resisted by the arms 50 which themselves operatively latched to the frame 10 by the screw nut connections, and the inner section 26.

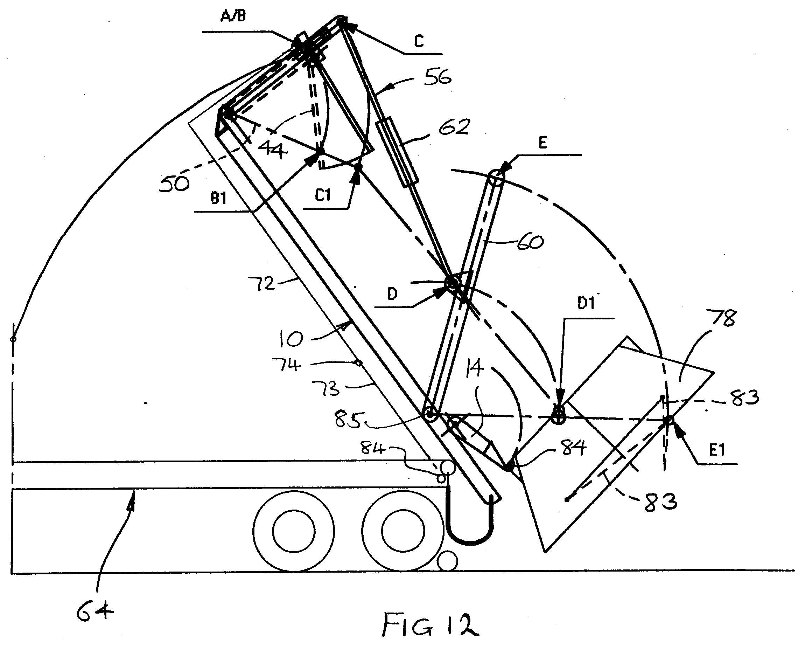

Tipping of the skip 78 is accomplished by operating the motors 42 to rotate the screws and consequently pivot the arms 50 and skip lifting arms 60 clockwise. As will be appreciated, this movement eventually causes the centre of gravity of the skip 78 to move clockwise over the interconnection between the projections 84 and the hooks 14 thereby permitting a certain amount of free rearward tipping of the skip 78 relative to the arm 60 until the skip 78 is arrested by the chains 83, as shown in figure 12. In order to prevent the arresting of the skip 78 transmitting shock loads through the links 56 to the screws 44, the damping units 62 absorb the shock loads. It will be appreciated that the skip 78 is semi-inverted (in the figure 12 position) thereby enabling the waste material W to be deposited at a suitable location. After the skip has reached the figure 12 position and the skip 78 has emptied, the frame 10 is lowered and the motors 42 operated in reverse to return the frame 10 and skip 78 back to the figure 7 position. It will be noted that in this motion rearward movement of frame 10 prior to arcuate movement does not occur. The frame rests on rollers 87 in the usual manner.

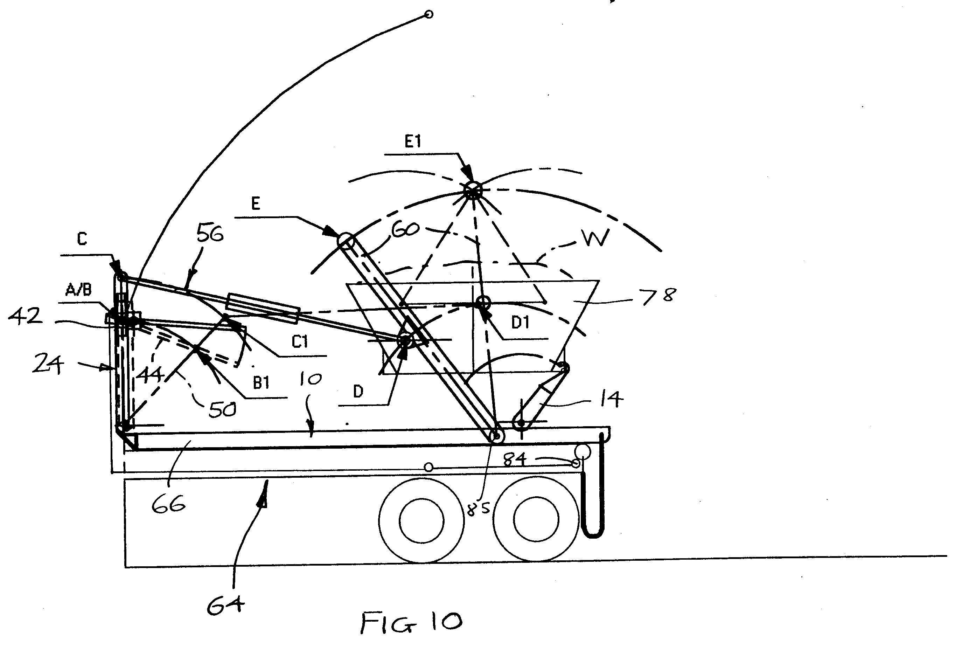

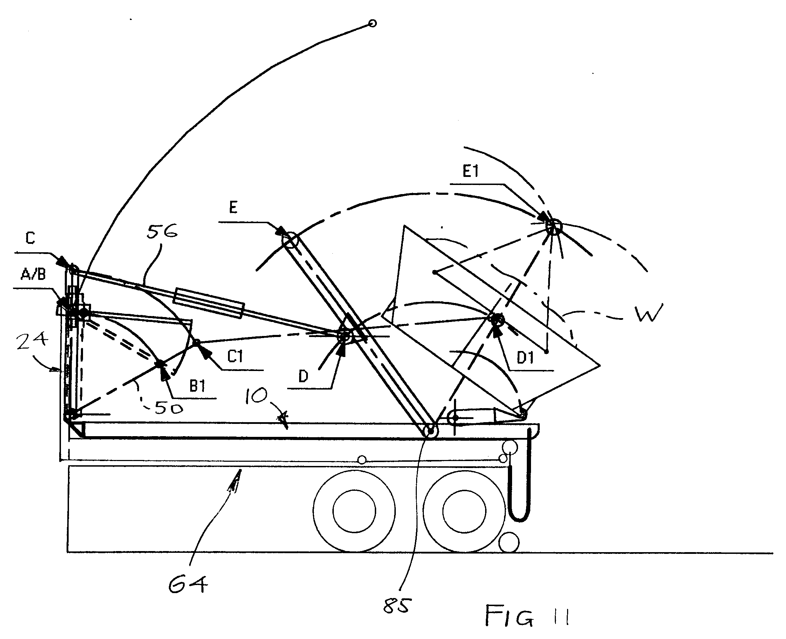

Referring now to figures 10, 11 and 12 there is shown a second sequence of operations in which the skip 78 can be tipped for emptying, and which is particularly suitable when the skip 78 is lightly laden. Here the tipping operation commences with the simultaneous operation of the electric motors 42 so as to cause the arms 50 of the outer section 28 to move clockwise relative to the inner section 26, as shown in figure 10. This thereby causes the links 56 to pivot the arm 60 towards the broken line position shown in fig 10. As the skip 78 moves rearwardly relative to the vehicle 64 the tip hooks 14 are rotated anticlockwise relative to the frame so as to engage the usual projections 86 on the skip 78. Operation of the motors 42 is continued until the arms 50 reach the full extent of their movement as shown in figure 11.

In that position the skip 78 is tipped slightly about the projections 86 held captive by the hooks 14. Once the figure 11 position has been reached, the goose-neck member 68 is then moved clockwise by the rams 76 so as to tip the frame 10 about the tipping axis 84 as shown in figure 12 the internal ram remaining extended. The contents W of the skip 78 are then deposited as described above.

By utilising the goose-neck member 68 and lower member 72 to pivot the frame 10 and move the centre of gravity of a heavily laden skip 78 over the pivot axis 85 of the arm 60, the motors 42 and screws 44 effectively act as brakes when tipping the skip. Consequently the strength and size of the motors 42 and screws 44 can be based on the forces required to lift a lightly laden skip 78 as described with reference to Figures 10 and 11.

In the example described above, skip tipping is achieved by locking the internal ram of lower frame part 72 in the extended condition; in this case the weight of the frame 10 hangs from the goose-neck 68. In an alternative embodiment the part 72 may be manual or electrically locked in an extended condition, or fish plates may be provided on the frame 10 to abut roller 87.

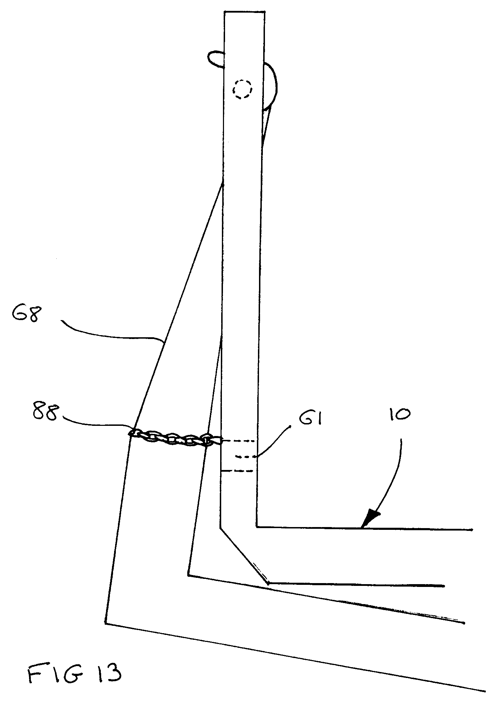

Referring finally to figure 13 there is shown a diagrammatic side view of a frame 10 and a goose-neck member 68. Pivotal movement of the goose-neck member 68 relative to the frame 10 is limited by a chain 88. The chain 88 forms a loop which passes around the goose-neck member 68 and is secured at either end to the cross-member 61. The chain 88, in use, constrains the rearward movement of the frame 10 relative to the vehicle 64 in the same manner as the chains 82 shown in figure 4. A small amount of slack is arranged in the chain to accommodate the relative motion of the goose neck member 68.

Other kinds of hook unit equipment are known which operate substantially in the manner described therein, and which are adapted to operate a demountable skip frame by motion of the goose-neck. Differences in construction of the different kinds of hook unit equipment and slight difference in the motion thereof can be accommodated within the principle of the present invention. For example a simplified embodiment of the present invention may be provided without the upstanding portion of the frame having separate inner and outer sections. In such an embodiment the upstanding section as a whole would be pivotable either by the action of the hook unit equipment and/or the weight of the skip. This simplified embodiment would consequently eliminate the need for drive means between the inner and outer sections.

## Claims

1. A demountable skip unit for a vehicle (64) having hook unit equipment (68,70,72,73) fitted thereon, the demountable skip unit comprising an articulated frame (10) having skip arms (60) pivotable thereon, the skip arms (60) being operable by the hook unit equipment (68,70,72,73) to load and unload a skip (78) from the frame (10).

2. A skip unit as claimed in claim 1 wherein the frame (10) comprises a base section (12) and an upstanding section (24) arranged at the front end of the base section (12) for connection to the hook unit equipment (68,70,72,73), the upstanding section (24) being pivotably mounted to the base section (12) and connected to the skip arms (60) by link means (56).

3. A skip unit as claimed in claim 2 or claim 3 and including a constraint device (82,88) to permit restricted rearward movement of the frame (10) relative to a vehicle (64) during operation of the hook unit equipment (68,70,72,73) to load and unload the skip (78) from the frame (10).

4. A skip unit as claimed in claim 3 wherein the constraint device (82) extends between the base section (12) of the frame (10) and the vehicle (64).

5. A skip unit as claimed in claim 3 wherein the constraint device (88) extends between the upright section (24) of the frame (10) and the hook unit equipment (68,70,72,73).

6. A skip unit as claimed in claim any of claims 2 to 5 wherein the frame (10) includes releasable latch means arranged between the base section (12) and the upstanding section (24) to selectively limit pivotable movement therebetween

7. A skip unit as claimed in any of claims 2 to 6 wherein the upstanding section (24) includes a location (34) adapted to receive a hook (70) of the hook unit equipment (68,70,72,73).

8. A skip unit as claimed in any of claims 2 to 7 wherein the link means (56) are substantially rigid and incorporate shock absorbing means (62).

9. A skip unit as claimed in any of claims 2 to 8 wherein the upstanding section (24) comprises relatively movable inner and outer sections (26,28) having releasable latch means therebetween.

10. A skip unit as claimed in claim 9 wherein the inner and outer sections (26,28) are pivotable about a common axis.

11. A skip unit as claimed in claim 9 or claim 10 wherein the link means (56) are provided between the outer sections (28) and the skip arms (60).

12. A skip unit as claimed in any of claims 9 to 11 wherein the inner and outer sections (26,28) are movable relative to one another by drive means provided therebetween.

13. A skip unit as claimed in claim 12 wherein the drive means comprise a motorised threaded bar (44) and captive nut (46) arrangement.

14. A skip unit as claimed in claim 12 wherein the drive means comprise a telescopic fluid actuator.
